# EUROPEAN PATENT APPLICATION

(11) **EP 2 022 438 A1**
(43) Date of publication of application: **11.02.2009**
(21) Application number: 07743534.5
(22) Date of filing: 17.05.2007
(51) Int. Cl.: A61C 3/02

(54) **CUTTING BAR FOR DENTAL USE**

(30) Priority: 23.05.2006 JP 2006143002
(71) Applicant: Nihon University, Tokyo 102-8275 (JP)
(72) Inventor: IKEMI, Takuji, Tokyo 1028275 (JP)
(74) Representative: Vossius & Partner
(86) International application number: PCT/JP2007/060099
(87) International publication number: WO 2007/135936

(57) **Abstract**

Provided is a cutting bar for dental use that can cut both dentin and enamel with a single bar unanesthetically and efficiently without causing any pain or unpleasant sensation in a patient, in particular, a cutting bar for dental use that can fundamentally solve the problem in that a cutting blade of a cutting bar rotating at low speed comes into contact with hard enamel present in a surface layer of a tooth during cutting of carious dentin to cause unpleasant sensation in a patient. A cutting bar for dental use (1) includes a head (2) in which a cutting blade (6) is formed; a neck (3) leading to the head (2); and a handle (4) joined to the neck (3) through an intermediation of a joint portion (5), **characterized in that** diamond abrasive grains are electrodeposited in a predetermined range extending from a substantially maximum diameter portion (8) of the head (2) to the neck (3).

## Description

### Technical Field

The present invention relates to a cutting bar for dental use that is attached to a rotary driving device such as a handpiece and cuts dentin and enamel.

### Background Art

In dental treatment, extremely elaborate work is required to be performed efficiently, in short time, and without causing any pain or unpleasant sensation to a patient. Inparticular, in cutting of a tooth, it is necessary to minimize pains and unpleasant sensation of the patient.

Therefore, for cutting of colored dentin or softened dentin of dental caries present in a cavity floor, a steel bar made of high-carbon tungsten steel or a carbide bar made of tungsten carbide having a cutting blade formed in a head at the tip is often attached to an electric engine-type handpiece to cut colored dentin or softened dentin (see, for example, Patent Documents 1 to 3). This is because the cutting blade is formed in the head, clogging is less easily caused and efficient dentin removal is possible even if the soft dentin is cut, and because a driving source for the electric engine-type handpiece is an electric motor and the electric engine-type handpiece rotates at speed lower than that of an air turbine type described later, and hence a heat generation amount during cutting is small, damage to a dental pulp is small, and, in general, anesthesia for the dental pulp is unnecessary. The carbide bar may be attached to the air turbine-type handpiece to cut carious dentin. However, in this case, the number of revolutions is high and the dentin is cut with low pressure, and hence even a healthy dentin portion is cut in some cases. Further, cooling by water injection is necessary in order to suppress heat generation during cutting by high-speed rotation. Therefore, in order to prevent pains caused by the cutting of the dentin portion and the water injection cooling, unlike the electric engine type handpiece, local anesthesia is necessary when the carious dentin is removed by use of the air turbine type handpiece.

On the other hand, in cutting of hard enamel present in a surface layer of a tooth, in general, a diamond point electrodeposited with diamond abrasive grains is often attached to the air turbine-type handpiece to cut the enamel (see, for example, Patent Documents 3 to 4). This is because a cutting blade is not formed in the diamond point and a cutting surface by the diamond point is smooth, and hence little vibration is given to a patient. Further, this is because the air turbine-type handpiece using compressed air or the like as a driving source can rotate at high speed, and hence improvement of a cutting performance as well as a reduction in treatment time can be realized.

As described above, though the diamond point is a cutting bar suitable for cutting hard enamel, a cutting blade for discharging scrapes is not formed in the diamond point, and hence the diamond point has a drawback in that, when cutting the soft dentin, clogging occurs and cannot cut the soft dentin. Moreover, if the diamond point is continuously used while the cutting performance is deteriorated, frictional heat and vibration occur to cause unpleasant sensation to the patient.

In general, a case of cutting only dentin or only enamel is rare. Therefore, in the conventional dental treatment, efficient dental treatment cannot always be performed because a cutting bar and a handpiece need to be replaced every time according to tooth structure to be cut. For example, the carbide bar or the like having the cutting blade formed in the head is used for cutting of soft dentin and, on the other hand, the diamond point is used for cutting of hard enamel.

When the carbide bar or the like having the cutting blade formed in the head is attached to the electric engine-type handpiece to cut dentin present in the cavity floor, the cutting blade of the cutting bar may inevitably come into contact with hard enamel present in a surface layer of a tooth. In this case, as described above, the electric engine-type handpiece rotates at low speed and the cutting blade is formed in the head at the tip of the carbide bar or the like, and hence, when the cutting blade comes into contact with the hard enamel, vibration increases to cause unpleasant sensation to the patient.

That is, in dental treatment, in particular, cutting of a tooth, extremely elaborate work is required to be performed efficiently, in short time, and without causing any pain or unpleasant sensation in a patient, whereas efficient dental treatment cannot always be performed with the cutting bar for dental use specialized and exclusively used for the tooth structure to be cut. In particular, the problem in that the cutting blade of the cutting bar rotating at low speed comes into contact with the hard enamel present in the surface layer of the tooth to cause unpleasant sensation in a patient is one of urgent problems that should be solved.
Patent Document 1: JP Hei 06-199580 A
Patent Document 2: JP Hei 09-075373 A
Patent Document 3: JP 2003-088536 A
Patent Document 4: JP 2005-211094 A

### Disclosure of the Invention

### Problem to be solved by the Invention

A problem to be solved by the present invention is to provide a cutting bar for dental use that can cut both dentin and enamel with a single bar unanesthetically and efficiently without causing any pain or unpleasant sensation in a patient, in particular, to provide a cutting bar for dental use that can fundamentally solve the problem in that a cutting blade of a cutting bar rotating at low speed comes into contact with hard enamel present in a surface layer of a tooth during cutting of carious dentin to cause unpleasant sensation in a patient.

### Means for Solving the Problems

The inventor of the present invention has obtained the following knowledge as a result of performing clinical tests using various prototypes in order to solve the above-mentioned problem. (A) When it is attempted to cut the carious dentin present in the cavity floor using the cutting bar having the cutting blade formed in the head as described above, the cutting blade inevitably comes into contact with the hard enamel present in the surface layer of the tooth to cause unpleasant sensation to the patient in some cases. However, if diamond abrasive grains are electrodeposited in a predetermined range including a part of the cutting blade that comes into contact with the enamel, a cut surface of the enamel as a contact portion is smoothed, and hence unpleasant sensation, in particular, vibration is not given to the patient. It is possible to efficiently cut the soft dentin with the cutting blade at the tip not electrodeposited with the diamond abrasive grains and cut the hard enamel with the diamond abrasive grains electrodeposited in the electrodeposited portion. Further, even when it is unnecessary to cut enamel with the diamond abrasive grains electrodeposited in the electrodeposited portion, the diamond abrasive grains are electrodeposited on the cutting blade surface excluding the tip. Therefore, even if the cutting blade rotating at low speed comes into contact with the hard enamel, unpleasant sensation, in particular, vibration is not given to the patient.

(B) As a result of various clinical tests, a range extending from a substantially maximum diameter portion of the head to the neck forming the cutting bar is a range in which the cutting blade inevitably comes into contact with the enamel when it is attempted to cut the dentin. Therefore, it is desirable to electrodeposit the diamond abrasive grains in this range.

(C) The thickness of enamel varies depending on a patient. The thickness of a tooth of the same patient varies depending on a region of the tooth. However, in general, the thickness of enamel is 1 mm to 2 mm. Therefore, if the diamond abrasive grains are electrodeposited over a range of 1 to 2 mm in a depth direction of cutting, i.e., an axial direction of the cutting bar, it is possible to cope with most of cases.

(D) A region of the maximum diameter portion of the head in which the cutting blade is formed is a region having the highest probability to contact with the enamel. Therefore, it is desirable to electrodeposit, allowing a margin for the contact, the diamond abrasive grains in a range of 1 to 2 mm in the neck direction from a region of 0.05 to 0.15 mm in the tip direction from the maximum diameter portion of the head. In other words, regardless of whether the enamel has to be cut, if the diamond abrasive grains are electrodeposited in the range, it is possible to solve the problem in that the cutting blade comes into contact with the enamel and unpleasant sensation are caused in the patient.

(E) It is possible to extremely easily impart a round bevel to an enamel cavity margin in composite resin restoration by electrodepositing the diamond abrasive grains in the neck direction from the region of the 0.05 to 0.15 mm in the tip direction from the maximum diameter portion of the head.

(F) In particular, when the head is spherical or semispherical, it is possible to make use of round extending to a boundary between the head and the neck from the region of 0.05 to 0.15 mm in the tip direction from the maximum diameter portion of the head. Therefore, it is possible to extremely easily impart the above-mentioned round bevel.

(G) In the conventional dental treatment, efficient dental treatment cannot always be performed because the cutting bar and the handpiece need to be replaced every time according to the tooth structure to be cut. For example, the cutting bar having the cutting blade formed in the head is used for cutting of soft dentin, and the diamond point is used for cutting of hard enamel. However, it is possible to perform not only cutting of dentin and enamel but also imparting of the round bevel by electrodepositing the diamond abrasive grains in a predetermined range extending from the substantially maximum diameter portion of the head to the neck forming the cutting bar, more specifically, in a range of 1 to 2 mm in the neck direction from the region of 0.05 to 0.15 mm in the tip direction from the maximum diameter portion of the head. Further, because the diamond abrasive grains are electrodeposited on the cutting blade surface excluding the tip, regardless of whether the enamel should be cut, it is possible to fundamentally solve the problem in that the cutting blade comes into contact with the hard enamel present in the surface layer during cutting of carious dentin to cause unpleasant sensation to the patient.

(H) As a material of the cutting bar, a region where the diamond abrasive grains are electrodeposited is a region which cuts the hard enamel. Therefore, when improvement of a cutting performance and the life of the cutting bar are taken into account, it is desirable to use hard metal, which contains tungsten carbide as a main component, for the head and the neck forming the cutting bar.

(I) On the other hand, a handle is not directly related to cutting. However, disinfection treatment is essential for the cutting bar before use and after use, and hence it is desirable to use austenitic stainless steel taking into account corrosion resistance.

On the basis of the knowledge described above, the inventor of the present invention has reached a cutting bar for dental use that can cut both dentin and enamel with only a single bar unanesthetically and efficiently without causing pains and unpleasant sensation in a patient and, in particular, a cutting bar for dental use that can solve the problem in that the cutting blade of the cutting bar rotating at low speed comes into contact with the hard enamel present in the surface layer of the tooth during cutting of carious dentin to cause unpleasant sensation to the patient. A gist of the cutting bar for dental use is as described below.

(1) A cutting bar for dental use including: a head in which a cutting blade is formed; a neck leading to the head; and a handle joined to the neck through an intermediation of a joint portion, characterized in that diamond abrasive grains are electrodeposited in a predetermined range extending from a substantially maximum diameter portion of the head to the neck.

(2) A cutting bar for dental use according to claim 1,
characterized in that the predetermined range extending in which the diamond abrasive grains are electrodeposited is a range of 1 to 2 mm in a neck direction from a region of 0.05 to 0.15 mm in a tip direction from a maximum diameter portion of the head.

(3) A cutting bar for dental use according to claim 1 or 2, characterized in that the head is spherical or semispherical shape.

(4) A cutting bar for dental use according to any one of claims 1 to 3, characterized in that the head is made of hard metal containing tungsten carbide as a main component.

(5) A cutting bar for dental use according to any one of claims 1 to 4, characterized in that the head is made of hard metal containing tungsten carbide as a main component.

(6) A cutting bar for dental use according to any one of claims 1 to 5, characterized in that the head is made of austenitic stainless steel.

### Effect of the Invention

(A) The cutting bar for dental use according to the present invention has advantages of both a cutting bar having a cutting blade which is formed in a head at the tip and specialized and exclusively used for cutting of soft dentin and a diamond point specialized and exclusively used for cutting of hard enamel. Therefore, with the cutting bar for dental use according to the present invention, it is possible to cut both dentin and enamel with only a single bar unanesthetically and efficiently without causing any pain or unpleasant sensation to the patient.

(B) In particular, when it is attempted to cut the carious colored dentin or the soft dentin present in the cavity floor using the conventional cutting bar, the cutting blade formed in the head may inevitably come into contact with the hard enamel present in the surface layer of the tooth to cause unpleasant sensation to the patient. However, the present invention solves this problem. The diamond abrasive grains are electrodeposited in a predetermined range extending from the substantially maximum diameter portion of the head to the neck forming the cutting bar, more specifically, a range of 1 to 2 mm in the neck direction from a region of 0.05 to 0.15 mm in the tip direction from the maximum diameter portion of the head. Therefore, it is possible to efficiently cut the soft dentin with the cutting blade at the tip not electrodeposited with the diamond abrasive grains and cut a contact portion with hard enamel, which is inevitably caused according to the cutting of the dentin, with an electrodeposited portion electrodeposited with the diamond abrasive grains.

(C) In the cutting blade at the tip not electrodeposited with the diamond abrasive grains, clogging is less easily caused and efficient dentin removal is possible even if soft dentin is cut. In the electrodeposited portion which is electrodeposited with the diamond abrasive grains, a cutting surface is smooth, and hence little vibration is given to the patient and unpleasant sensation are not caused even if the cutting surface comes into contact with the enamel. Even when it is unnecessary to cut the enamel during cutting of carious dentin, the diamond abrasive grains are electrodeposited on the cutting blade surface excluding the tip. Therefore, even if the cutting blade comes into contact with the hard enamel, unpleasant sensation, in particular, vibration is not given to the patient.

(D) Therefore, though efficient dental treatment cannot always be performed by the conventional cutting bar for dental use specialized and exclusively used for dentin to be cut because a cutting bar and a handpiece need to be replaced every time according to the tooth structure to be cut, with the cutting bar for dental use according to the present invention, it is possible to cut both dentin and enamel with only a single bar unanesthetically and efficiently without causing any pain or unpleasant sensation to the patient. In particular, it is possible to fundamentally solve the problem in that the cutting blade of the cutting bar rotating at low speed comes into contact with the hard enamel present in the surface layer of the tooth during cutting of carious dentin to cause unpleasant sensation to the patient.

(E) With the cutting bar according to the present invention having the spherical or semispherical head, the diamond abrasive grains are electrodeposited in the round portion extending to a boundary between the head and the neck from the region of 0.05 to 0.15 mm in the tip direction from the maximum diameter portion of the head. Therefore, it is possible to extremely easily impart a round bevel to an enamel cavitymargin in composite resin restoration. This also contributes to efficiency of dental treatment.

(F) Whereas the head in which the cutting blade is formed is a region for cutting not only soft dentin but also hard enamel, with the cutting bar according to the present invention, the head of which is made of hard metal containing tungsten carbide as a main component, it is possible to sufficiently expect improvement of a cutting performance and extension of the life of the cutting bar. The same holds true for the cutting bar for dental use, the neck of which is made of hard metal containing tungsten carbide as a main component.

(G) Moreover, whereas disinfection treatment is essential for the cutting bar before use and after use in terms of hygiene, the cutting bar for dental use according to the present invention, the handle of which is made of austenitic stainless steel, is excellent in corrosion resistance. This contributes to hygiene management and it is possible to sufficiently expect extension of the life of the cutting bar.

### Brief Description of the Drawings

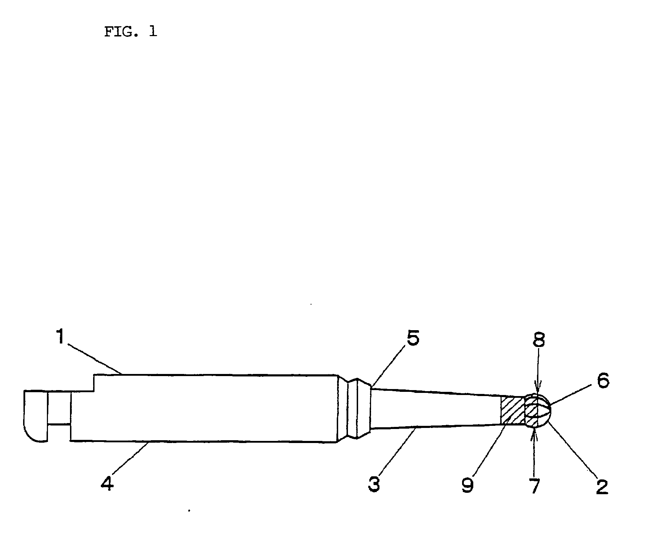

[Fig. 1] Fig. 1 is a schematic diagram illustrating an example of a cutting bar for dental use according to the present invention.

### Description of Symbols

- 1: cutting bar for dental use
- 2: head
- 3: neck
- 4: handle
- 5: joint portion
- 6: cutting blade
- 7: maximum diameter portion
- 8: substantially maximum diameter portion
- 9: electrodeposited portion

### Best Mode for Carrying out the Invention

A best mode for carrying out the present invention is described with reference to Fig. 1, which is a schematic diagram illustrating an example of a cutting bar for dental use 1 according to the present invention. As shown in Fig. 1, the cutting bar for dental use 1 according to the present invention includes a head 2 in which a cutting blade 6 is formed, a neck 3 leading to the head, and a handle 4 joined to the neck through an intermediation of a joint portion 5. Diamond abrasive grains are electrodeposited in a predetermined range extending from a substantially maximum diameter portion 8 of the head 2 to the neck 3. The predetermined range electrodeposited with the diamond abrasive grains is hereinafter referred to as electrodeposited portion 9.

In the head 2 constituting the cutting bar, a cutting blade 6 is formed on the surface of the head in order to make it possible to perform efficient dentin removal that less easily causes clogging even if soft dentin is cut. The number of blades of the cutting blade 6 is not specifically limited. However, if the number of blades is too large, clogging tends to occur and a cutting performance falls. On the other hand, if the number of blades is too small, vibration involved in cutting occurs to cause unpleasant sensation in a patient. Therefore, it is desirable to form six to eight blades. Note that cutting blade formation can be performed by a publicly-known technology such as grinding, electric discharge machining, or the like using industrial diamond or the like but is not limited to this.

As a shape of the head 2, various shapes have been conventionally used. However, it is desirable to use a spherical shape shown in Fig. 1 or a semispherical shape. Whereas the diamond abrasive grains are electrodeposited in the predetermined range extending from the substantially maximum diameter portion 8 of the head 2 to the neck 3 in the cutting bar for dental use 1 according to the present invention, if the head 2 is spherical or semispherical, it is possible to extremely easily impart a round bevel to an enamel cavity margin in composite resin restoration by making use of a round portion extending from the substantially maximum diameter portion 8 of the head 2 to a boundary between the head and the neck.

A shape of the neck 3 leading to the head 2 is not specifically limited. However, in terms of handling of the cutting bar and visibility, it is desirable to provide a taper narrowing toward the tip as shown in Fig. 1. The neck 3 is preferably as slim as possible, though a balance with strength is taken into account.

The head 2 and the neck 3 may be molded from one base material or may be molded from separate base materials and joined by a method such as welding or brazing. Concerning a method of molding the head 2 and the neck 3 from a base material, the molding can be performed by a publicly-known technology such as grinding, electric discharge machining, or the like using industrial diamond or the like, but is not limited to this.

As a material of the head 2 and the neck 3, it is also possible to use high-carbon tungsten steel, which has been generally used conventionally. However, a region where the diamond abrasive grains are electrodeposited is a region for cutting hard enamel, and hence, when improvement of a cutting performance and the life of the cutting bar are taken into account, it is desirable to use hard metal, which contains tungsten carbide (WC) as amain component, for the head 2 and the neck 3 constituting the cutting bar. For example, it is possible to use a sintered compact, a base material of which is hard metal specified in JIS B4053 and a hard phase containing cobalt (Co) as a metal phase of which is tungsten carbide (WC).

As the WC-Co, it is possible to use powder metallurgy alloy obtained by, with tungsten carbide powder (WC) as a base, adding cobalt powder (Co) of 3 to 20% in mass % as a binder and mixed well, compression molding the mixed tungsten carbide powder and the cobalt powder with press or the like, and then heating the molded product to 1400 to 1500°C in a hydrogen air current and sintering the molded product. It is also possible to use WC-TiC-Co added with titanium carbide (TiC) of 10 to 15% in mass % or WC-TiC-TaC-Co added with tantalum carbide (TaC).

Though the handle 4 is not directly related to cutting, because disinfection treatment is essential for the cutting bar before use and after use, it is desirable to use austenitic stainless steel taking into account corrosion resistance. For example, it is possible to use 18-8 stainless steel obtained by alloying 18% Cr and 8% Ni to low C.

A method of joining with the neck 3 is not specifically limited either. A method of forming one end of the handle 4 into a hollow portion and press-fitting the neck 3 in the formed hollow portion or a bonding method by an adhesive can be used. In the case of the press-fitting, it is desirable to use an anaerobic adhesive that hardens when the air is blocked.

For the electrodeposited portion 9, it is desirable to electrodeposit the diamond abrasive grains in a range of 1 to 2 mm in the neck direction from a region of 0.05 to 0.15 mm in the tip direction from a maximum diameter portion 7 of the head 2. This is based on the following knowledge: (1) when it is attempted to cut carious dentin present in a cavity floor using the cutting bar having the cutting blade formed in the head 2, though the cutting blade inevitably comes into contact with hard enamel present in a surface layer of a tooth to cause in some cases unpleasant sensation in a patient, if diamond abrasive grains are electrodeposited in a predetermined range that comes into contact with the enamel, a cut surface of the enamel as a contact portion is smoothed, and hence unpleasant sensation, in particular, vibration is not given to the patient; (2) even when it is unnecessary to cut enamel, the diamond abrasive grains are electrodeposited on the cutting blade surface excluding the tip, and hence, even if the cutting blade 6 comes into contact with the hard enamel, unpleasant sensation, in particular, vibration is not given to the patient; (3) as a result of various clinical tests, a range extending from the substantially maximum diameter portion 8 of the head 2 to the neck 3 constituting the cutting bar is a range which inevitably comes into contact with the enamel when it is attempted to cut the dentin; (4) though the thickness of enamel varies depending on a patient and the thickness of a tooth of the same patient varies depending on a region of the tooth, in general, the thickness of enamel is 1 mm to 2 mm, and hence, if the diamond abrasive grains are electrodeposited over a range of 1 to 2 mm in a depth direction of cutting, i.e., an axial direction of the cutting bar, it is possible to cope with most of cases; and (5) a region of the maximum diameter portion 7 of the head 2 is a region having the highest probability to contact with the enamel, and hence it is desirable to electrodeposit, allowing a margin for the contact, the diamond abrasive grains in a range of 1 to 2 mm in the neck direction from a region of 0.05 to 0.15 mm in the tip direction from the maximum diameter portion 7 of the head. The above-mentioned technical knowledge is proved by various clinical tests conducted not only by the inventor of the present invention but also by plural dentists.

There is also an effect that (6) it is possible to extremely easily impart a round bevel to an enamel cavity margin in composite resin restoration by electrodepositing the diamond abrasive grains in the neck direction from the region of the 0.05 to 0.15 mm in the tip direction from the maximum diameter portion 7 of the head 2. In this case, a technical meaning of forming the head 2 spherical or semispherical is extremely significant. This is because, the diamond abrasive grains are electrodeposited in the round portion extending to a boundary between the head 2 and the neck 3 from the region of 0.05 to 0.15 mm in the tip direction from the maximum diameter portion of the head 2, and hence it is possible to extremely easily impart a round bevel to an enamel cavity margin in composite resin restoration by making use of the round portion. This also sufficiently contributes to efficiency of dental treatment.

Therefore, concerning the electrodeposited portion 9 as a characteristic portion of the cutting bar for dental use 1 according to the present invention, it is desirable to electrodeposit the diamond abrasive grains in a range of 1 to 2 mm in the neck direction from the region of 0.05 to 0.15 mm in the tip direction from the maximum diameter portion 7 of the head 2. Consequently, though, in the conventional dental treatment, efficient dental treatment cannot always be performed because a cutting bar and a handpiece need to be replaced every time according to dentin to be cut, for example, the cutting bar having the cutting blade formed in the head is used for cutting of soft dentin and the diamond point is used for cutting of hard enamel, with the cutting bar for dental use 1 according to the present invention, it is possible to perform, with a single cutting bar, not only cutting of dentin and enamel but also imparting of a round bevel. In particular, it is possible to fundamentally solve the problem in that the cutting blade rotating at low speed comes into contact with the hard enamel present in the surface layer during cutting of carious dentin to cause unpleasant sensation to the patient.

As the diamond abrasive grains, industrial diamond can be used and diamond abrasive grains having a grain diameter of 20 to 160 µm can be used. As a result of various clinical tests, diamond abrasive grains having a grain diameter of about 53 to 63 µm is desirable. A method of electrodepositing the diamond abrasive grains is not specifically limited either. It is possible to electrodeposit and fix the diamond abrasive grains with metal such as Ni by immersing base metal in a metal solution of Ni or the like, immersing a container, which stores the diamond abrasive grains, in the metal solution, forming a metal layer in the base metal by plating, and holding and fixing the diamond abrasive grains in the metal layer.

The cutting bar for dental use 1 according to the present invention is desirably attached to the electric engine-type handpiece and used. The electric engine type rotates at low speed, and hence the patient feels relatively small pains and it is possible to treat the patient unanesthetically. Even if the head 2 and the neck 3 are made of hard metal containing tungsten carbide as a main component, the electric engine type handpiece rotates at low speed, and hence healthy dentin and enamel are not excessively cut by mistake. Similarly, the electric engine type handpiece rotates at low speed, and hence a heat generation amount during cutting is small, cooling by water injection is unnecessary, and local anesthesia for preventing pains caused by the water injection cooling is also unnecessary.

As described above, the cutting bar for dental use 1 according to the present invention has the advantages of both the cutting bar having the cutting blade formed in the head at the tip and which is specialized and exclusively used for cutting of soft dentin and the diamond point specialized and exclusively used for cutting of hard enamel. Therefore, with the cutting bar for dental use 1 according to the present invention, it is possible to cut both dentin and enamel with only a single bar unanesthetically and efficiently without causing any pain or unpleasant sensation to the patient. In particular, it is possible to fundamentally solve the problem in that the cutting blade 6 of the cutting bar rotating at low speed comes into contact with the hard enamel present in the surface layer of the tooth during cutting of carious dentin to cause unpleasant sensation to the patient.

## Claims

1. A cutting bar for dental use comprising:
a head in which a cutting blade is formed;
a neck leading to the head; and
a handle joined to the neck through an intermediation of a joint portion, wherein
diamond abrasive grains are electrodeposited in a predetermined range extending from a substantially maximum diameter portion of the head to the neck.

2. A cutting bar for dental use according to claim 1, wherein the predetermined range in which the diamond abrasive grains are electrodeposited is a range of 1 to 2 mm in a neck direction from a region of 0.05 to 0. 15 mm in a tip direction from a maximum diameter portion of the head.

3. A cutting bar for dental use according to claim 1 or 2, wherein the head is spherical or semispherical shape.

4. A cutting bar for dental use according to any one of claims 1 to 3, wherein the head is made of hard metal containing tungsten carbide as a main component.

5. A cutting bar for dental use according to any one of claims 1 to 4, wherein the neck is made of hard metal containing tungsten carbide as a main component.

6. A cutting bar for dental use according to any one of claims 1 to 5, wherein the handle is made of austenitic stainless steel.
